(19) Europäisches Patentamt

European Patent Office

Office européen des brevets

(11) **EP 1 063 606 B1**

(12) **FASCICULE DE BREVET EUROPEEN**

(45) Date de publication et mention
de la délivrance du brevet:
**20.12.2006 Bulletin 2006/51**

(51) Int Cl.:
***G06K 9/62*** *(2006.01)*

(21) Numéro de dépôt: **00810530.6**

(22) Date de dépôt: **19.06.2000**

(54) **Reconnaissance automatique de caractères sur fond structuré par combinaison des modèles de fond et des caractères**

Automatisches Erkennen von Zeichen auf einem strukturierten Hintergrund durch Kombination der Hintergrundmodelle mit den Zeichen

Automatic recognition of characters on a structured background by combining backgroundmodels and characters

(84) Etats contractants désignés:
**AT BE CH CY DE DK ES FI FR GB GR IE IT LI LU MC NL PT SE**

(30) Priorité: **21.06.1999 MC 2427**

(43) Date de publication de la demande:
**27.12.2000 Bulletin 2000/52**

(73) Titulaire: **KBA-GIORI S.A.**
**1002 Lausanne (CH)**

(72) Inventeur: **Stringa, Luigi**
**98000 Monaco (MC)**

(74) Mandataire: **Bugnion Genève**
**Bugnion S.A.**
**Conseils en Propriété Industrielle**
**Case Postale 375**
**1211 Genève 12 (CH)**

(56) Documents cités:
**US-A- 5 524 069        US-A- 5 778 088**

**Description**

**PRECEDENTS DE L'INVENTION**

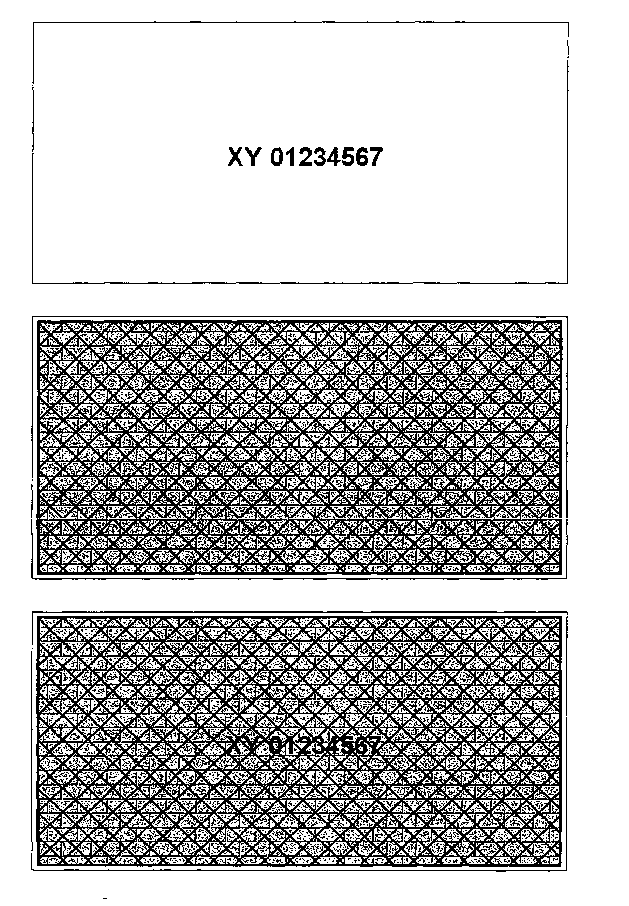

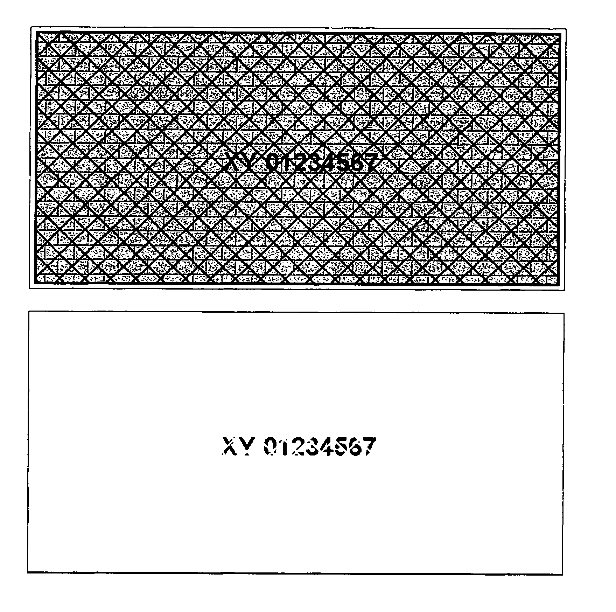

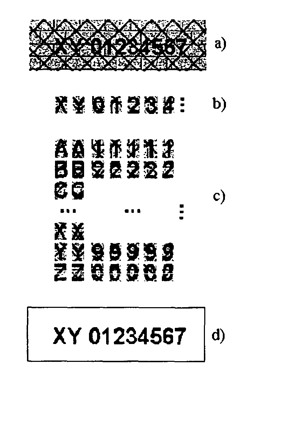

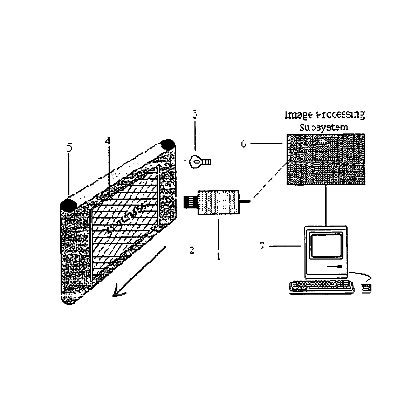

La présente invention concerne un procédé pour la reconnaissance automatique des caractères imprimés sur n'importe lequel matériel, même si le fond présente de structures très contrastées, et donc interférantes d'une façon importante avec la structure des caractères. La grande majorité de systèmes connus approche le problème en essayant de séparer les caractères du fond au moyen de seuils parfois même très astucieux et sophistiqués. Malheureusement cette technique faillit quand le contraste des structures du fond est très important, surtout si la position des caractères est variable par rapport aux dites structures. Comme conséquence, les images des caractères contiennent parfois une partie de signes du fond (celle qui a dépassé le seuil), ou parfois elles ne sont pas complètes, puisqu'une partie de la structure des caractères n'a pas dépassé le seuil. C'est par exemple le cas des billets de banque, dont l'impression de numéros de série a lieu dans une phase séparée (d'habitude successive) à l'impression du reste, et avec en général une imprimante différente. L'enregistrement ne peut donc pas être parfait, et en conséquence les numéros de série «bougent» par rapport au fond : s'ils sont imprimés sur une zone structurée du billet, c'est à dire, sur une zone dessinée, ils bougent par rapport à la structure (au dessin) du fond. En plus, dans les cas cités, même la recherche et la segmentation des caractères risquent de faillir à cause des structures du fond.

En effet, même si avec une énorme quantité de variations, le processus d'extraction et reconnaissance passe presque toujours par les étages suivants :

- saisie des images du document, et plus en générale, de l'objet contenant les caractères à reconnaître. La saisie est obtenue au moyen d'une caméra électronique, et est suivie d'habitude par des élaborations visées à améliorer le contraste et réduire le bruit
- recherche sur l'image (désormais électronique) de la position des caractères à reconnaître. La recherche est souvent fondée sur une analyse des changements brusques d'illumination (du type passage de blanc à noir), notamment de leurs distributions spatiales
- segmentation de la zone identifiée en sous-zones, chacune contenant un caractère seulement. La segmentation se fait par exemple par analyse de la projection de la densité de noir sur un segment parallèle à la base de la ligne de caractères : les minima de cette densité sont corrélables à l'espace blanc entre caractères
- chaque caractère ainsi isolé est comparé avec des prototypes (modèles) de toutes les lettres et/ou des tous les chiffres, soit en termes de superposabilité (techniques connues comme «template matching»), soit en termes de séquence de structures caractéristiques, du type ligne verticale, horizontale, oblique, etc. (techniques connues comme «features extraction» ou analyse structurelle).

En tout cas il est évident que si la partie de l'image segmentée comme caractère contient de structures étranges à la forme du caractère même (par exemple de lignes appartenants à la structure du fond), le risque de faillite de la comparaison avec les dites prototypes est très élevé. Risque que peut aussi être conséquence de la perte de parties discriminantes de la structure du caractère ensuite à un seuillage trop drastique dans la phase de séparation caractères-fond.

C'est pour ça que les approches précédentes à la reconnaissance automatique des caractères imprimés sur de fonds très structurés et à haut contraste ne sont pas suffisamment rentables.

**BREF SOMMAIRE DE L'INVENTION**

Selon la présente invention, les objets sur lesquels sont imprimés les caractères à reconnaître sont analysés optiquement par de bien connus moyens optoélectroniques, comme par exemple une caméra CCD (linéaire ou matricielle, noir et blanc ou couleur), avec la résolution désirée pour produire des images électroniques des caractères à reconnaître. Dans la suite on utilisera le «terme» image dans le sens d'image électronique, notamment un ensemble discret de valeurs de densité, en général organisé comme une matrice rectangulaire. Chaque élément de la matrice, dit pixel, est une mesure de l'intensité de la lumière réfléchie par la correspondante partie de l'objet. Pour les images en couleur, la description en général consiste en trois matrices correspondantes aux composantes rouge, verte et bleu de chaque pixel. Pour simplifier, la description suivante concerne le cas du noir et blanc : l'extension à la couleur se fait en répétant les mêmes opérations sur les trois matrices. Bût de l'invention est la reconnaissance automatique sur images électroniques de caractères imprimés sur un fond très structuré dont le contraste peut être même comparable avec le contraste de structures des caractères, comme dans l'exemple de la Planche I/4 c). Le premier pas du procédé à la base de la présente invention consiste dans la production d'un modèle du fond qui peut être obtenu saisissant des images de un ou plusieurs échantillons sur lesquels est présent seulement le dessin du fond, sans aucun caractère (voir comme exemple Planche I/4 b).

On peut notamment utiliser comme modèle la moyenne des images des dits échantillons : dans le cas d'images en noir à blanc on aura une seule matrice-moyenne, tandis que dans le cas d'images en couleur les matrices-moyennes seront trois, par exemple rouge, vert et bleu. On produit ensuite les modèles des symboles (par exemple lettres et/ou chiffres) à reconnaître, soit saisissant les images d'un ensemble de caractères imprimés sur un fond blanc, soit utilisant directement les images électroniques de fichiers informatiques aujourd'hui commercialement disponibles pour la plupart de «fonts». Dans le premier cas, on peut construire le modèle de chaque symbole à reconnaître comme la moyenne des images d'un certain nombre d'exemplaires du même symbole, imprimé sur fond blanc.

Une fois construits les modèles des symboles et le modèle du fond, la première phase du procédé, qu'on pourrait bien appeler «phase d'apprentissage», est terminée.

Pendant la phase de reconnaissance, on procède selon les pas suivants :

- saisie de l'image de l'échantillon à reconnaître, qui contient les caractères inconnus imprimés sur le fond dans une position elle aussi inconnue (exemple Planche II/4-a)
- enregistrement du modèle du fond avec l'image saisi, au moyen d'une quelconque des techniques bien connues d'enregistrement des images, par exemple utilisant la méthode de la corrélation maximum
- soustraction du modèle (enregistré) de l'image saisie : l'image différence, où le fond sera presque éliminé, évidence très bien la position des caractères (Planche II/4 - b, différence image moins modèle du fond enregistré)
- recherche de la position de chacun des caractères sur l'image différence. L'opération se fait au moyen d'une quelconque des techniques bien connues de localisation et segmentation des caractères, comme l'analyse des transitions brusques de densité, du type passage noir-blanc. Pour chaque position-caractère on aura donc isolé une sous-image, dont les dimensions sont les mêmes que celles des modèles des symboles (Planche III/4 - b, sous-images des caractères segmentés)
- extraction du modèle du fond enregistré de la sous-image du fond correspondant à chaque caractère inconnu
- combinaison, pour chacune des positions-caractères, des modèles des symboles avec la sous-image du modèle du fond correspondant (Planche III/4 - c). Puisque le modèle du fond a été enregistré avec le fond de l'image contenante les caractères à reconnaître, dans les sous-images combinées modèle du fond - modèle de chiffres et/ou lettres, la position relative caractère-fond est la même que dans l'image inconnue. En synthèse, on aura donc produit pour chaque position-caractère des nouveaux prototypes (les modèles combinés) des symboles (lettres et/ou des chiffres) avec le même fond que dans l'image inconnue. Une de techniques de combinaison développée sera décrite dans le chapitre «Description de quelques variantes préférées», mais on pourrait bien utiliser une quelconque des méthodes proposées par d'autres auteurs
- comparaison de chacun des caractères inconnus avec tous les modèles combinés dans les pas précédents. La reconnaissance du caractère avec fond se fait donc par comparaison avec de modèles des symboles avec le même fond et dans la même position. On peut bien utiliser n'importe laquelle des techniques de reconnaissance bien connues, comme la méthode template-matching ou features extraction, et caetera.

**DESCRIPTION DES DESSINS**

Planche I/4 montre un exemple de caractères imprimés sur un fond très structuré et à haut contraste : en a) on voit une séquence de caractères imprimés sur fond blanc, en b) le dessin du fond et en c) la séquence a) imprimée sur le fond b).

Planche II/4 a) est la même que I/4 c), tandis que II/4 b) montre le résultat de la soustraction du modèle du fond enregistré de l'image du billet complètement imprimé. Planche III/4 montre en a) la portion du billet de l'exemple des planches précédentes contenant les caractères à reconnaître et en b) les sous-images correspondantes à chaque position-caractère, comme résultat de la segmentation. La planche III/4 en c) montre, pour chaque position-caractère, la combinaison correspondante des sous-images du fond enregistré avec les modèles de tous les symboles possibles, et donc les modèles combinés décrits dans le texte. L'exemple met en évidence comme les caractères à traiter (b) puissent être assez plus efficacement reconnus si comparés avec les modèles combinés (c) plutôt que avec les modèles des symboles imprimés sur fond blanc (voir par exemple Planche III/4 - d).

Planche IV/4 montre un arrangement typique du système de reconnaissance décrit dans le texte.

**DESCRIPTION DE QUELQUES VARIANTES PREFEREES**

Dans ce qui suive, on va décrire comme exemple, mais non limitative, de la présente invention une des variantes préférées concernante la reconnaissance automatique de numéros de série imprimés sur les billets de banque. En effet, dans plusieurs types de billets le numéro de série est imprimé, en partie ou dans sa totalité, sur le dessin du billet. L'impression des billets de banque se fait notamment avec un mélange de techniques différentes, généralement au moins offset et taille douce. Cette dernière en particulier présente d'habitude des zones avec une grande quantité de lignes à très haut contraste : quand on imprime le numéro de série sur une de ces zones il est assez difficile avec les techniques conventionnelles de séparer les caractères du fond, et donc de les reconnaître. En plus, la série est normalement imprimée dans la phase finale de la production, après l'offset et la taille douce, et sur une machine différente. Même si l'on utilise des systèmes de repérage très sophistiqués, l'enregistrement relatif entre les numéros de série et le dessin du fond résulte plutôt variable, et peut normalement «bouger» de quelques millimètres.

La Planche IV/4 montre un arrangement du système de reconnaissance des numéros de série dans les billets de banque où une caméra 1 linéaire CCD, avec ses lentilles 2 et son système d'illumination 3, est utilisée pour saisir les images des billets 4 dont on veut lire les numéros de série autant qu'ils sont transportés par le ruban aspirateur 5.

Les lignes balayées par la caméra sont mémorisées en séquence dans un premier circuit mémoire-tampon du sous-système d'élaboration de l'image 6 pour produire une image électronique de chaque billet.

Le sous-système d'élaboration de l'image 6, qui pourrait être basé soit sur hardware spécial soit sur ordinateurs programmables, comme DSP (Digital Signal Processor), des PC très rapides, etc., réalise des opérations différentes pendant les phases d'apprentissage (modèle du fond et modèles des caractères), et la phase de reconnaissance.

Pendant la phase d'apprentissage du modèle du fond :

- il saisit les images des billets non numérotées choisies comme «Ensemble d'Apprentissage du Fond» (EAF) et le mémorise dans une mémoire appropriée
- il extrait du EAF une image de «référence» pour l'enregistrement, soit automatiquement (par exemple la première de l'EAF), soit à l'aide de l'opérateur, au moyen de la console de l'Interface Opérateur 7
- il enregistre toutes les images de l'EAF en identifiant d'abord le déplacement horizontal $\Delta x$ et vertical $\Delta y$ de chaque image par rapport à l'image de référence, en appliquant ensuite un décalage de $-\Delta x$ et $-\Delta y$. Dans cette variante la mesure du déplacement est effectuée utilisant la méthode de la corrélation maximum : une petite portion rectangulaire $S_0$ (noyau de repérage) de l'image de référence, avec centre sur les coordonnées $x_0$, $y_0$ choisies par exemple par l'Opérateur (hors de la zone d'impression des caractères), est comparée avec une portion $S_1$, avec les mêmes dimensions, dont le centre est déplacé pas à pas sur chaque position (pixel) de l'image de l'EAF pour trouver la position $x_1$, $y_1$ où le coefficient de corrélation a son maximum (ça corresponde à la meilleure superposition entre les deux images).

Le déplacement est alors donné par :

$$\Delta x = x_1 - x_0 \text{ et } \Delta y = y_1 - y_0.$$

Selon cette variante le modèle du fond $M_r$ est obtenu comme moyenne arithmétique des images de l'EAF enregistrées avec l'image de référence.

Pendant la phase d'apprentissage des modèles des symboles, le sous-système d'élaboration de l'image 6 :

- saisit les images d'un ensemble de billets où l'on vient d'imprimer sur fond blanc tous les chiffres et/ou les lettres utilisées dans les numéros de série, une fois chacune et dans des positions connues (Ensemble d'Apprentissage Caractères - EAC)
- il segmente ensuite les images de l'EAC en sous-images contenante chacune un seul caractère. Selon cette variante, la segmentation est obtenue avec une technique standard d'analyse des transitions blanc-noir, très efficace quand les caractères sont imprimés sur fond blanc
- il produit le modèle $M_s$ de chaque symbole (chiffre ou lettre) comme moyenne sur EAC des sous-images de chaque position, enregistrée par exemple avec celle du premier billet de EAC prise comme référence. Enregistrement et moyenne sont faits comme dans le cas du fond, mais les noyaux de repérage coïncident avec l'entière sous image caractère.

D'habitude le numéro de série des billets de banque utilise les caractères alphabétiques et numériques d'un seul font, donc il serait normalement suffisant une position sur les billets de EAC par symbole (une seule A, une seule B, et cælera). Autrement, il faudra en général prévoir autant de positions par symbole quant sont les fonts employés (Par exemple : A New York, A Courrier, A Genève, etc.).

Pendant la phase de reconnaissance, selon la présente variante de l'invention, le sous-système d'élaboration de l'image 6, après la saisie de l'image :

- enregistre d'abord l'image du fond de chaque billet à lire avec le modèle du fond, au moyen du même noyau de repérage utilisé pour l'apprentissage du modèle et avec la même technique de corrélation

- produit donc l'image différence billet complète (enregistré) moins modèle du fond et puis cherche les positions-caractère : la technique utilisée se base sur l'analyse des transitions déjà mentionnée. En général la recherche peut être effectuée sur une zone limitée du billet, puisque l'impression du numéro de série bouge par rapport au dessin du fond seulement de quelque millimètre

- extrait, pour chaque position-caractère repérée sur l'image différence, la correspondante sous-image du modèle du fond : ayant été enregistré, dite sous-image serait exactement la portion de fond sur lequel le caractère inconnu a été imprimé

- pour chaque position-caractère, combine la correspondante sous-image du modèle du fond $M_f$ (enregistré) avec chacun des modèles des symboles $M_s$.

On aura aussi pour chaque position-caractère les nouveaux modèles, caractères plus fond, avec la même position relative que sur le billet à lire. Dans cette variante de l'invention, la dite combinaison $M_c$ est obtenue pixel par pixel avec les équations :

$$M_c = K_0 M_f M_s + K_1 (1 - \sqrt{M_s})$$

$$[1]$$

si on a imprimé d'abord le fond et ensuite les caractères, autrement :

$$M_c = K_0 M_f M_s + K_1 (1 - \sqrt{M_f})$$

$$[2]$$

En tous cas, $K_0$ et $K_1$ sont des constants caractéristiques des encres et du papier employés. Dans les équations [1] et [2] le premier terme (produit $K_0 M_f M_s$) tient compte de la transmissivité des encres employées et de la réflectivité du papier tandis que le second terme est lié à la réflectivité de la surface de l'encre imprimée comme dernier.

- pour chaque position-caractère, calcule le coefficient de corrélation entre la correspondante sous-image du billet et tous les nouveaux modèles (caractères plus fond) : le caractère à traiter est reconnu comme celui du modèle combiné correspondant au maximum du dit coefficient de corrélation

- selon cette variante de l'invention, on compare en plus le dit maximum du coefficient de corrélation avec un seuil pour vérifier la qualité d'impression du caractère et du fond des sous-images correspondantes à chaque position-caractère. Si la qualité est bonne (sous-image à traiter et modèle combiné presque identiques) le coefficient est très proche à 1, tandis que une qualité très mauvaise produira un coefficient plus proche à zéro.

Les autres variantes préférées inclurent :

a) l'application à la reconnaissance des caractères sur de documents autre que les billets de banque, comme lettres, carte postales, étiquettes, chèques bancaires ou postales, etc.
b) la substitution du système de transport à rubans avec un transport souhaitable pour des feuilles de grandes dimensions, par exemple un cylindre comme dans les machines à imprimer ou selon le brevet en référence (4)
c) la substitution de la caméra linéaire avec une caméra matricielle
d) l'utilisation de la moyenne des images de l'EAF comme image de référence pour l'enregistrement du fond
e) l'extraction automatique du noyau de repérage pour l'enregistrement du fond, par exemple selon la technique proposée dans la référence (1)
f) la construction du modèle du fond avec un procédé autre que la moyenne, par exemple selon la technique indiquée dans la référence (2)

## REFERENCES

(1) L. Stringa - «Inspection Automatique de la qualité d'impression par un modèle élastique» - Brevet d'Invention n° 2411.99.2479 délivré par le Ministère de l'Etat de la Principauté de Monaco (27.04.99)
(2) L. Stringa - «Procedure for Producing A Reference Model etc.» - U.S. Patent n° 5.778.088 - Jul. 7, 1998
(3) L. Stringa - «Procédé de contrôle automatique de la qualité d'impression d'une image multichrome» - Demande

**EP 1 063 606 B1**

de Brevet Européen n° 97810160.8-2304

(4) L. Stringa - «Installation for Quality Control of Printed Sheets, Especially Security Paper» - U.S. Patent n° 5.598.006 - Jan. 28, 1998

(5) Rice-Nagy-Nartkr - «Optical Character Recognition» - Kluwer Academic Publishers - 1999

**Revendications**

1. Procédé pour obtenir par des moyens électroniques la reconnaissance automatique des caractères imprimés sur n'importe lequel matériel, même si le fond présente de structures très contrastées, en utilisant un dispositif optoélectronique de saisie d'image et un système d'élaboration d'image, dit procédé comprenant les pas suivants :

   a) Apprentissage

   a.1) production d'un modèle du fond, obtenu en saisissant les images de un ou plusieurs échantillons sur lesquelles on a seulement le fond
   a.2) production des modèles des caractères (symboles, alphabétiques et/ou numériques), obtenus saisissant les images d'un ensemble de caractères imprimés sur fond blanc contenant au moins un caractère par symbole.

   b) Reconnaissance

   b.1) saisie de l'image de l'échantillon à reconnaître, qui contient les caractères inconnus imprimés sur le fond
   b.2) enregistrement du modèle du fond avec le fond de l'image saisie
   b.3) extraction du modèle du fond enregistré de la sous-image du fond correspondant à chaque caractère inconnu
   b.4) combinaison, pour chaque position-caractère, des modèles des lettres et/ou des chiffres avec la sous-image du fond correspondant (modèles combinés)
   b.5) comparaison des caractères inconnus avec tous les modèles combinés correspondants à la même position-caractère
   b.6) reconnaissance de chaque caractère inconnu comme correspondant au symbole, le modèle combiné du quel se superpose mieux avec lui, selon une technique de reconnaissance.

2. Procédé selon la revendication 1, **caractérisé en ce que** le modèle du fond est une des images d'un ensemble d'apprentissage du fond (EAF).

3. Procédé selon la revendication 1. **caractérisé en ce que** le modèle du fond est la moyenne des images de l'EAF, enregistrées entre elles.

4. Procédé selon la revendication 1, **caractérisé en ce que** le modèle du fond est obtenu par un ensemble d'échantillons contenant soit le fond soit les caractères, selon une technique de séparation caractères-fond.

5. Procédé selon l'une quelconque des revendications 1 à 4, **caractérisé en ce que** les modèles des caractères à reconnaître sont obtenus comme moyennes d'images correspondantes d'un ensemble d'apprentissage de caractères (EAC).

6. Procédé selon l'une quelconque des revendications 1 à 4, **caractérisé en ce que** les modèles des caractères à reconnaître sont obtenus par des fichiers informatiques.

7. Procédé selon l'une quelconque des revendications 1 à 6, **caractérisé en ce que** ladite technique de reconnaissance est la méthode dénommée « template-matching » ou la méthode dénommée « features extraction ».

8. Procédé selon l'une quelconque des revendications 1 à 7, utilisant un système de saisie d'image en couleurs, dont la reconnaissance est exploitée dans le canal-couleurs qui donne la meilleure superposition.

9. Procédé selon l'une quelconque des revendications 1 à 7, utilisant un système de saisie d'image en couleurs, dont la reconnaissance est exploitée sur la combinaison des canaux-couleurs.

10. Procédé pour obtenir sur chaque image à traiter la séparation des caractères inconnus du fond par soustraction du modèle du fond enregistré, construit selon l'une quelconque des revendications 1, 2, 3, 4, 8 ou 9.

11. Procédé selon l'une quelconque des revendications 1 à 9, **caractérisé en ce que** la combinaison $M_c$ du modèle du fond $M_f$ et du modèle des caractères $M_s$ est faite selon l'équation :

$$M_c = K_0 M_f M_s + K_1 (1 - \sqrt{M_s})$$

si le fond est imprimé avant les caractères, ou, autrement, selon l'équation :

$$M_c = K_0 M_f M_s + K_1 (1 - \sqrt{M_f})$$

où $K_0$ et $K_1$ sont des constantes caractéristiques des encres et du papier employés.

12. Procédé selon l'une quelconque des revendications 1 à 11, utilisé pour vérifier la qualité d'impression en seuillant la valeur du coefficient de corrélation entre la sous-image de chacune des positions-caractères et le correspondant modèle combiné choisi au niveau reconnaissance.

**Claims**

1. A process for obtaining by electronic means the automatic recognition of characters printed on any medium, even if the background exhibits highly contrasted structures, by using an optoelectronic device for image capture and an image computation system, said process comprising the following steps :

    a) Learning

        a.1) production of a model of the background, obtained by capturing the images of one or more samples, on which images there is only the background
        a.2) production of the models of the characters (symbols, alphabetic and/or numerical), obtained capturing the images of a set of characters printed on white background containing at least one character per symbol.

    b)Recognition

        b.1) capturing of the image of the sample to be recognized, which contains the unknown characters printed on the background
        b.2) registering of the model of the background with the background of the image captured
        b.3) extraction of the model of the registered background from the subimage of the background corresponding to each unknown character
        b.4) combining, for each character position, of the models of the letters and/or the numerals with the subimage of the corresponding background (combined models)
        b.5) comparing of the unknown characters with all the combined models corresponding to the same character position
        b.6) recognition of each unknown character as corresponding to the symbol, the combined model of which superposes best with it, according to a recognition technique.

2. The process as claimed in claim 1, **characterized in that** the model of the background is one of the images of a background learning set (BLS).

3. The process as claimed in claim 1 **characterized** that the model of the background is the average of the images of the BLS, mutually registered.

4. The process as claimed in claim 1, **characterized** that the model of the background is obtained via a set of samples containing either the background or the characters, according to any character/background separation technique.

5.  The process as claimed in one of claims 1 of 4, **characterized in that** the models of the characters to be recognized are obtained as averages of the corresponding images of a character learning set (CLS).

6.  The process as claimed in one of claims 1 of 4, **characterized in that** the models of the characters to be recognized are obtained via computer files.

7.  The process as claimed in one of claims 1 to 6, **characterized in that** said recognition technique is the method called "template-matching" or the method called "features extraction".

8.  The process as claimed in one of claims 1 to 7, using a color image capture system, of which the recognition is utilized in the color channel which gives the best superposition.

9.  The process as claimed in one of claims 1 to 7, using a color image capture system, of which the recognition is utilized on the combination of the color channels.

10. A process for obtaining on each image to be processed the separation of the unknown characters from the background by subtraction of the model of the registered background, constructed according to one of claims 1, 2, 3, 4, 8 or 9.

11. The process as claimed in one of claims 1 of 9, **characterized** that the combination $M_c$ of the model of the background $M_f$ and of the model of the characters $M_s$ is effected according to the equation:

$$M_c = K_0 M_f M_s + K_1 (1 - \sqrt{M_s})$$

if the background is printed before the characters or in other cases according to the equation :

$$M_c = K_0 M_f M_s + K_1 (1 - \sqrt{M_f})$$

where $K_0$ and $K_1$ are constants characteristic of the inks and of paper employed.

12. The process as claimed in one of claims 1 at 11, used to verify the printing quality by thresholding the value of the coefficient of correlation between the subimage of each of the character positions and the corresponding combined model chosen at the recognition level.

**Patentansprüche**

1.  Verfahren zum automatischen Erkennen von auf beliebigem Material gedruckten Zeichen mit Hilfe elektronischer Mittel, selbst wenn der Hintergrund sehr kontrastreiche Strukturen aufweist, indem eine optoelektronische Vorrichtung zur Bilderfassung und ein Bildverarbeitungssystem verwendet wird, wobei dieses Verfahren die folgenden Schritte umfasst:

    a) Lernen

    a.1) Erzeugung eines Hintergrundmodells durch Erfassen der Bilder einer oder mehrerer Proben, auf denen sich nur der Hintergrund befindet,
    a.2) Erzeugung von Modellen der Zeichen (Symbole, alphabetische und/oder alphanumerische Zeichen) durch Erfassen der Bilder einer Gruppe von Zeichen, die auf weissem Hintergrund gedruckt sind, der wenigstens ein Zeichen je Symbol enthält.

    b) Erkennen

    b.1) Erfassen des zu erkennenden Bildes der Probe, welche die unbekannten, auf dem Hintergrund gedruckten Zeichen enthält,
    b.2) Speichern des Hintergrundmodells mit dem Hintergrund des erfassten Bildes,

b.3) Auslesen des Unterbilds des jedem unbekannten Zeichen entsprechenden Hintergrunds aus dem gespeicherten Hintergrundmodell,

b.4) Kombination der Buchstaben- und/oder Ziffernmodelle mit dem Unterbild des entsprechenden Hintergrunds (kombinierte Modelle) für jede Zeichenposition,

b.5) Vergleich der unbekannten Zeichen mit allen kombinierten Modellen, die derselben Zeichenposition entsprechen,

b.6) Erkennen jedes unbekannten Zeichens als demjenigen Symbol entsprechend, dessen kombiniertes Modell sich besser mit ihm überlagert, gemäss einer Erkennungstechnik.

2. Verfahren nach Anspruch 1, **dadurch gekennzeichnet, dass** das Hintergrundmodell eines der Bilder einer Lerngruppe des Hintergrunds (EAF) ist.

3. Verfahren nach Anspruch 1, **dadurch gekennzeichnet, dass** das Hintergrundmodell das Mittel der zwischen ihnen gespeicherten Bilder der EAF ist.

4. Verfahren nach Anspruch 1, **dadurch gekennzeichnet, dass** das Hintergrundmodell durch eine Gruppe von Proben erhalten wird, die den Hintergrund oder die Zeichen enthalten, gemäss einer Technik der Trennung Zeichen-Hintergrund.

5. Verfahren nach einem der Ansprüche 1 bis 4, **dadurch gekennzeichnet, dass** die Modelle der zu erkennenden Zeichen als Mittelwerte der entsprechenden Bilder einer Lerngruppe der Zeichen (EAC) erhalten werden.

6. Verfahren nach einem der Ansprüche 1 bis 4, **dadurch gekennzeichnet, dass** die Modelle der zu erkennenden Zeichen durch Informatik-Dateien erhalten werden.

7. Verfahren nach einem der Ansprüche 1 bis 6, **dadurch gekennzeichnet, dass** die erwähnte Erkennungstechnik die "template-matching" genannte Methode oder die "features extraction" genannte Methode ist.

8. Verfahren nach einem der Ansprüche 1 bis 7, wobei ein System zur Erfassung des Farbbilds verwendet wird, dessen Erkennung in demjenigen Farbenkanal ausgewertet wird, der die beste Überlagerung ergibt.

9. Verfahren nach einem der Ansprüche 1 bis 7, wobei ein System zur Erfassung des Farbbilds verwendet wird, dessen Erkennung über die Kombination der Farbenkanäle ausgewertet wird.

10. Verfahren, um auf jedem zu behandelnden Bild die Trennung der unbekannten Zeichen vom Hintergrund durch Subtraktion vom gespeicherten Hintergrundmodell zu erhalten, das nach einem der Ansprüche 1, 2, 3, 4, 8 oder 9 konstruiert wurde.

11. Verfahren nach einem der Ansprüche 1 bis 9, **dadurch gekennzeichnet, dass** die Kombination $M_c$ des Hintergrundmodells $M_f$ und des Zeichenmodells $M_s$ nach folgender Gleichung erfolgt:

$$M_c = K_0 \, M_f \, M_s + K_1 (1 - \sqrt{M_s})$$

wen der Hintergrund vor den Zeichen gedruckt worden ist, oder andernfalls nach der Gleichung:

$$M_c = K_0 \, M_f \, M_s + K_1 (1 - \sqrt{M_f})$$

wobei $K_0$ und $K_1$ die charakteristischen Konstanten der verwendeten Farben und des verwendeten Papiers sind.

12. Verfahren nach einem der Ansprüche 1 bis 11, welches zum Überprüfen der Druckqualität verwendet wird, indem der Wert des Koeffizienten der Korrelation zwischen dem Unterbild jeder der Zeichenpositionen und dem entsprechenden, in der Phase der Erkennung gewählten kombinierten Modell mit einem Schwellwert verglichen wird.

**XY 01234567**

XY 01234567

a)

XY01234567

b)

XY012334:

c)

AA
BB
CC
...        ...        ⋮
XX
YY
ZZ

d)

XY 01234567